# EUROPÄISCHE PATENTANMELDUNG

(11) **EP 2 325 504 A2**
(43) Veröffentlichungstag der Anmeldung: **25.05.2011**
(21) Anmeldenummer: 10401171.3
(22) Anmeldetag: 06.10.2010
(51) Int. Cl.: F16B 13/00

(54) **Spreizdübel**

(30) Priorität: 29.10.2009 DE 102009044356
(71) Anmelder: fischerwerke GmbH & Co. KG, 72178 Waldachtal (DE)
(72) Erfinder: Nehl, Wolfgang, 72178 Waldachtal (DE)

(57) **Zusammenfassung**

Die Erfindung betrifft einen Spreizdübel (1) mit einem sich im Wesentlichen in Längsrichtung des Spreizdübels (1) erstreckenden Spreizbereich (2), mit zwei Spreizzungen (11), von denen jeweils kammartig ineinandergreifende Spreizelemente (12) in Querrichtung des Spreizdübels (1) abstehen, wobei die Spreizelemente (12) jeweils eine Spreizöffnung (15) aufweisen. Die Spreizöffnungen (15) überdecken sich in einem Ausgangszustand, bilden ein den Spreizbereich (2) längs durchsetzendes Spreizloch (16) und sind in einem Gebrauchszustand in Querrichtung des Spreizdübels (1) versetzt zueinander. Um das Verhältnis zwischen den Kräften bzw. Momenten zum Einbringen einer Spreizschraube und den Haltewerten zu verbessern, schlägt die Erfindung vor, dass sich die Querschnittsfläche A_{L} des Spreizlochs (16) weniger weit in Richtung der Spreizzungen (11) erstreckt als quer hierzu.

## Beschreibung

Die Erfindung betrifft einen Spreizdübel mit den Merkmalen des Oberbegriffs des Anspruchs 1.

Aus der Druckschrift EP 0 922 864 A1 ist ein Spreizdübel bekannt mit einem Spreizbereich, der durch zwei längs des Spreizdübels verlaufende Spreizzungen gebildet wird. Von den Spreizzungen stehen jeweils scheibenförmige Spreizelemente in Querrichtung ab. Die Spreizelemente sind hintereinander längs des Spreizbereichs mit Abstand zueinander angeordnet und stehen jeweils quer zur Längserstreckung des Dübels. Die Spreizelemente der beiden Spreizzungen greifen dabei jeweils kammartig ineinander. Der Spreizbereich wird in einer im Weiteren als ,,Ausgangszustand" bezeichneten Stellung im Kunststoffspritzgussverfahren hergestellt, in dem die beiden Spreizzungen weiter beabstandet sind, als dies dem Nenndurchmesser des Spreizdübels entspricht. Spätestens beim Einführen in ein Bohrloch werden die Spreizzungen daher zusammengedrückt. Diese Stellung wird im Weiteren als "Gebrauchszustand" bezeichnet. Erst durch Einbringen eines Spreizstifts, insbesondere einer Schraube, wird der Abstand der Spreizzungen wieder etwas vergrößert, um spreizend Halt in einem Bohrloch zu finden. Dies wird im Weiteren als "Spreizzustand" bezeichnet. Die Spreizelemente weisen jeweils kreisförmige Spreizöffnungen auf, die sich im Ausgangszustand überdecken, so dass sie bei einer Herstellung des Spreizdübels im Spritzgussverfahren durch einen bzw. zwei längs angeordnete Werkzeugkerne gebildet werden. Durch das Zusammenschieben zum Gebrauchszustand bekommen jeweils benachbarte Spreizöffnungen einen radialen Versatz zueinander. Wird dann ein Spreizstift eingebracht, so bewirkt dies radiale Kräfte zurück in Richtung des Ausgangszustands, wodurch eine Spreizwirkung erreicht wird.

Der Erfindung liegt die Aufgabe zugrunde, einen derartigen Spreizdübel bezüglich des Verhältnisses zwischen den Kräften bzw. Momenten zum Einbringen des Spreizstifts und den Haltewerten zu verbessern. In Bezug auf einen Spreizdübel mit Schraube als Spreizstift heißt dies anders ausgedrückt, dass bei gleichem Drehmoment höhere Haltewerte oder die gleichen Haltewerte bei niedrigerem Drehmoment erreicht werden.

Diese Aufgabe wird erfindungsgemäß durch die Merkmale des Anspruchs 1 gelöst. Der erfindungsgemäße Spreizdübel weist einen Spreizbereich mit zwei sich in Längsrichtung erstreckenden Spreizzungen auf. Grundsätzlich bedeutet "zwei" hier mindestens zwei. Spritzwerkzeugtechnisch sind mehr als zwei Spreizzungen schwierig, aber denkbar. Von den Spreizzungen stehen kammartig ineinandergreifende Spreizelemente in Querrichtung des Spreizdübels ab. Die Spreizelemente weisen jeweils eine Spreizöffnung auf, wobei die Spreizöffnungen sich in einem Ausgangszustand, insbesondere nach der urformenden Herstellung als Kunststoffspritzgießteil, überdecken und gemeinsam ein den Spreizbereich längs durchsetzendes Spreizloch bilden.

Mit einer "Spreizöffnung" ist insbesondere ein Loch mit geschlossenem Umfang gemeint, es kann sich aber auch um eine Geometrie ohne geschlossenen Rand, also beispielsweise ein teilweise offenes Oval oder dergleichen handeln. In diesem Fall ist das den Spreizbereich durchsetzende Spreizloch einerseits aus dem offenen Rand der Spreizöffnung und andererseits durch die Geometrie der gegenüberliegenden Spreizzunge an dieser Querschnittsstelle gebildet.

Mit "überdecken" ist eine Überdeckung der in Längsrichtung projizierten Flächen der Spreizöffnungen gemeint. Wichtig ist in diesem Zusammenhang, dass es keine wesentlichen Hinterschneidungen gibt, die das Entfernen eines Werkzeugkerns verhindern würden. Es kann jedoch auch zu einer nur teilweisen Überdeckung kommen, beispielsweise wenn die Spreizöffnungen in Längsrichtung immer kleiner werden und somit ein konischer Werkzeugkern zum Einsatz kommt. Im Gebrauchszustand, also wenn die Spreizzungen vom Ausgangszustand aus etwas zueinander bewegt wurden, sind die Spreizöffnungen in Querrichtung des Spreizdübels versetzt zueinander.

Der erfindungsgemäße Spreizdübel zeichnet sich dadurch aus, dass die Spreizöffnungen nicht kreisrund sind, sondern sich die Querschnittsfläche A_{L} des Spreizlochs weniger weit in Richtung der Spreizzungen erstreckt als quer hierzu. Mit der Querschnittsfläche A_{L} des Spreizlochs ist bei Spreizöffnungen mit geschlossenem Rand die Querschnittsfläche Aₒ der Spreizöffnungen gemeint. Im Falle von Spreizöffnungen mit offenem Rand ist die Querschnittsfläche A_{L} des Spreizlochs definiert durch den Rand der Spreizöffnung einerseits und die Geometrie der gegenüberliegenden Spreizzunge an dieser Querschnittsstelle andererseits.

Durch die erfindungsgemäße Geometrie des Spreizlochs werden beim Einbringen eines Spreizstifts mit Kreisquerschnitt, also insbesondere einem Standardnagel oder einer Standardschraube, höhere Kräfte in Richtung der Spreizzungen als quer hierzu erzeugt. Hintergrund hierfür ist die Erkenntnis, dass in Vollbaustoffen, wie beispielsweise Beton, die Haltewirkung im Wesentlichen von den Spreizzungen und weit weniger von den sich quer aufweitenden Spreizelementen ausgeht, was auf die größere Fläche der Spreizzungen im Vergleich zu den Spreizelementen zurückzuführen ist. Die Querspreizung der Spreizelemente 90° versetzt zur Spreizrichtung der Spreizzungen ist jedoch dann von Bedeutung, wenn in Hohlbaustoffen, wie beispielsweise Hochlochziegel, befestigt werden soll. Hier kann bereits durch geringe Kräfte eine Verspreizung der einzelnen Spreizelemente im Bereich der Hohlräume erreicht werden, was zu einem formschlüssigen Hintergreifen von Stegen im Hohlbaustoff führt. Gegenüber den Spreizzungen, die sich an den Stegen nur der Länge nach verspreizen können, wird durch die Spreizelemente ein Verkrallen an den Stegen erreicht. Die erfindungsgemäße Geometrie des Spreizlochs nützt diese Erkenntnis dahingehend aus, dass das Spreizloch in Richtung der Spreizzungen eng ist, so dass im Vollbaustoff maximale Spreizkräfte auf und in Richtung der Spreizzungen, im Weiteren "Hauptspreizrichtung" genannt, wirken. Gleichzeitig werden nur geringe Anteile der Kräfte bzw. Momente zum Einbringen des Spreizelements für eine Verspreizung senkrecht zur Hauptspreizrichtung, im Weiteren "Nebenspreizrichtung", verwendet. Insbesondere bei Hohlbaustoffen findet dennoch auch eine Verspreizung der Spreizelemente in Nebenspreizrichtung statt, mit dem gewünschten Effekt der Verkrallung.

Dementsprechend ist mit der Querschnittsfläche A_{L} des Spreizlochs die Fläche gemeint, die im Wesentlichen den Querschnitt des Spreizlochs in diesem Bereich bildet. Darüber hinaus könnte dieser Querschnitt durch nicht zu berücksichtigende Nuten oder dergleichen auch in Richtung der Spreizzungen erweitert sein, was auf die genannten Kraftverhältnisse jedoch nur geringen Einfluss hätte.

Vorzugsweise erstreckt sich die Querschnittsfläche A_{L} des Spreizlochs maximal 0,75 mal so weit in Richtung der Spreizzungen wie quer hierzu. Durch diese Abmessungsverhältnisse wird erreicht, dass sich der oben beschriebene Effekt deutlich einstellt. Noch besser hat sich ein Verhältnis von 1 zu 2 herausgestellt, also wenn sich das Spreizloch halb so weit in Richtung der Spreizzungen erstreckt wie quer hierzu.

Um eine gleichmäßige Nutzung des gesamten Umfangs zu erreichen, ist die Querschnittsfläche A_{L} des Spreizlochs konzentrisch und punktsymmetrisch zur Längsachse des Spreizdübels geformt, wobei sich dies auf den Ausgangszustand bezieht.

In einer bevorzugten Ausführungsform nimmt die Querschnittsfläche Aₒ der Spreizöffnungen mindestens 25% der jeweiligen Querschnittsfläche Aₒ des Spreizdübels im Gebrauchzustand ein. Gegenüber dem genannten Stand der Technik liegt dieses Verhältnis deutlich höher. Es hat sich jedoch gezeigt, dass sich hierdurch das Verhältnis zwischen den Kräften bzw. Momenten zum Einbringen des Spreizelements und den Haltewerten verbessern lässt.

Die Erfindung schlägt weiterhin vor, dass die Spreizelemente im Längsschnitt des Spreizdübels gesehen nicht rechteckig sind sondern sich in Richtung der gegenüberliegenden Spreizzunge verjüngen. Besonders gute Haltewerte ergeben sich bei einem Verhältnis der Breite B zur Höhe H von mindestens 1 bis maximal 1,5, insbesondere in Hohlbaustoffen, wo die Spreizelemente die vorhandenen Stege im Befestigungsgrund stabil hintergreifen können. Daneben ergibt sich bei diesem Verhältnis eine gute Herstellbarkeit im Kunststoffspritzgussverfahren des Spreizdübels. Dabei wird die Breite B des Spreizelements am Fuß des Spreizelements in Längsrichtung und die Höhe H von diesem Fuß aus in Querrichtung des Spreizdübels in Richtung der gegenüberliegenden Spreizzunge gemessen. Als "Fuß" wird derjenige Teil des Spreizelements bezeichnet, an dem das Spreizelement in die Spreizzunge übergeht.

Vorzugsweise sind die Spreizzungen am einbringseitigen Ende des Spreizdübels elastisch verbunden. Die Verbindung der Spreizzungen gewährleistet, dass der Spreizdübel nicht aus Versehen beim Transport oder beim Einführen in ein Bohrloch aufgespalten wird und dadurch schlecht einführbar ist. Die Elastizität ermöglicht gleichzeitig, dass die Spreizschenkel zur Herstellung des Gebrauchszustands leicht zusammengedrückt und anschließend durch ein Spreizelement auch wieder verspreizt werden können.

Die Erfindung wird nachfolgend anhand eines Ausführungsbeispiels erläutert.

Es zeigen:

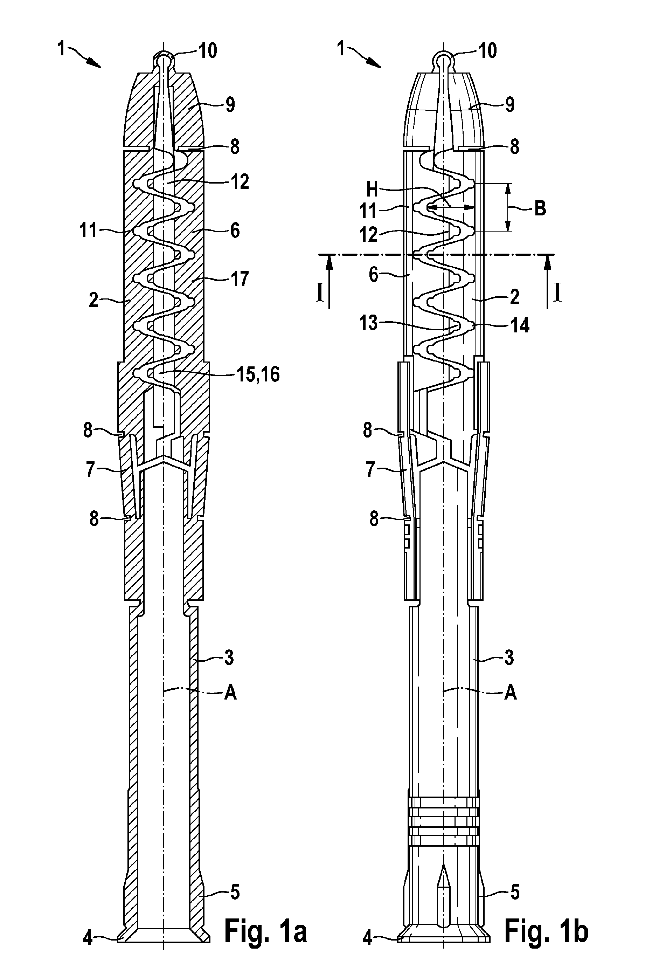

- Figur 1a: den erfindungsgemäßen Spreizdübel in Seitenansicht im Ausgangszustand;
- Figur 1 b: denselben Spreizdübel im Längsschnitt im Ausgangszustand;
- Figur 1c: einen Querschnitt entsprechend Pfeilen 1 aus Figur 1a;
- Figur 2a: den erfindungsgemäßen Spreizdübel in Seitenansicht im Gebrauchszustand;
- Figur 2b: denselben Spreizdübel im Längsschnitt im Gebrauchszustand; und
- Figur 2c: einen Querschnitt entsprechend Pfeilen ll aus Figur 2a.

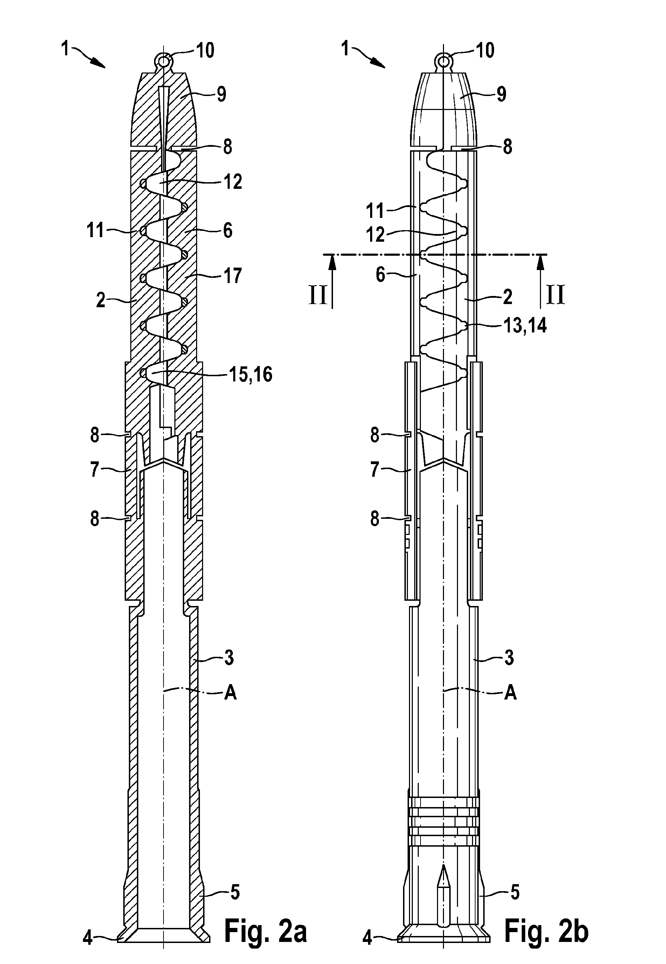

Der in den Figuren dargestellte Spreizdübel 1 ist ein langgestrecktes, hülsenähnliches Bauelement aus Polyamid. Er weist die Grundform eines so genannten Rahmendübels auf, das heißt an einen Spreizbereich 2, der sich in Einbringrichtung des Spreizdübels vorne befindet, schließt sich ein rohrförmiger Schaftbereich 3 an. Die Begriffe "vorne" und ,,hinten" sind im Weiteren stets auf die Einbringrichtung des Spreizdübels in ein Bohrloch bezogen. "Vorne" entspricht in den Figuren 1a, 1b, 2a und 2b oben, "hinten" entsprechend unten.

Der Schaftbereich 3 wäre beispielsweise bei einer Befestigung eines Rahmens an einer Wand (nicht dargestellt) innerhalb eines Durchgangslochs im Rahmen angeordnet. Spreizbereich 2 und Schaftbereich 3 nehmen im Ausführungsbeispiel jeweils etwa die Hälfte der Länge des Spreizdübels 1 ein. Je nach zu befestigendem Anbauteil kann dieses Verhältnis jedoch auch deutlich abweichen. Am hinteren Ende weist der Schaftbereich 3 einen Kragen 4 in Form einer Durchmessererweiterung und vier über den Umfang verteilte Drehsicherungsrippen 5 auf, wie sie allgemein von Kunststoffdübeln bekannt sind.

Der Spreizbereich 2 ist längs in zwei Spreizhälften 6 geteilt. Die Spreizhälften 6 sind am Schaftbereich 3 über Verbindungsstege 7 angebunden, wobei die Verbindungsstege 7 einerseits am Schaftbereich 3 und andererseits an der jeweiligen Spreizhälfte 6 mit je einem durch eine Nut gebildeten Filmscharnier 8 verbunden sind. Am vorderen Ende der Spreizhälften 6 weisen diese wiederum Filmscharniere 8 und hieran angeschlossen nach vorne gerichtete kurze Spreizschalen 9 auf, die an dem einbringseitigen Ende des Spreizdübels 1 über ein dünnes, schmales und bogenförmiges Band 10 elastisch miteinander verbunden sind. Diese Anbindung der Spreizhälften 6 ermöglicht, dass die Spreizhälften 5 leicht von dem in den Figuren 1a - 1 c dargestellten Ausgangszustand zu dem in den Figuren 2a - 2c dargestellten Gebrauchszustand zusammengedrückt werden können.

Die Spreizhälften 6 weisen Spreizzungen 11 auf, die sich mit einem gleich bleibenden Querschnitt in Form eines Kreissegments längs des Spreizdübels 1 erstrecken. Dabei bildet der Kreisbogen des Kreissegments den Umfang des Spreizdübels 1 und die Kreissehne ist zur Längsachse A des Spreizübels 1 gerichtet. Von den Spreizzungen 11 1 weisen radial zur Längsachse A des Spreizübels 1 hin Spreizelemente 12, die im Längsschnitt des Spreizdübels 1 gesehen eine dreieckige Form aufweisen. Die Spreizelemente 12 der beiden Spreizzungen 11 greifen kammartig ineinander und ergänzen sich so in ihrer Kontur. Werden die Spreizzungen 11, wie in den Figuren 2a und 2b dargestellt, zusammengeschoben, so liegen die Spreizelemente 12 aneinander an. In dieser Position verrasten die beiden Spreizzungen 11 miteinander. Hierzu weisen die Spreizelemente 12 an ihren der jeweils gegenüberliegenden Spreizzunge 11 zugewandten Enden einen Wulst 13 auf, der in eine korrespondierende, leicht hinterschnittene Nut 14 im Bereich zwischen zwei Spreizelementen 12 der gegenüberliegenden Spreizzunge 11 eingreift. Im Querschnitt gesehen ergänzen die Spreizelemente 12 die Spreizzungen 11 bei der Bildung des Kreisquerschnitts des Spreizdübels 1.

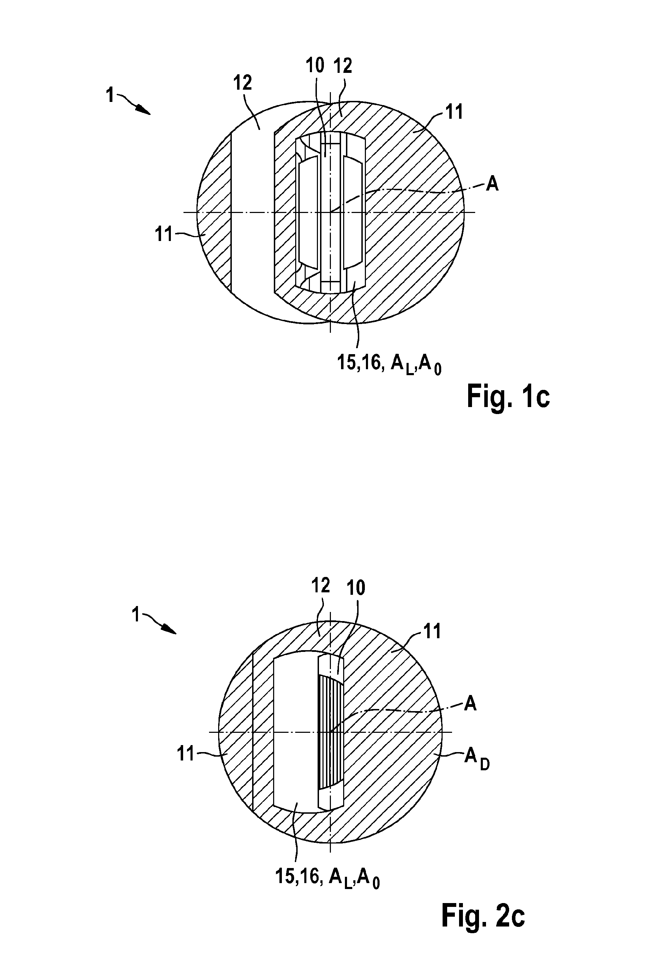

Die Spreizelemente 12 weisen jeweils eine das Spreizelement 12 in Längsrichtung des Spreizdübels 1 durchsetzende Spreizöffnung 15 auf, die einen im Wesentlichen rechteckigen Querschnitt aufweist. Dabei weisen die längeren Seiten zu den Spreizzungen 11 und die kürzeren Seiten sind leicht nach außen gewölbt. Im Ausgangszustand überdecken sich die Spreizöffnungen 15 der Spreizelemente 12 in Längsrichtung des Spreizdübels 1 gesehen (Figuren 1 bund 1c), während sie im Gebrauchszustand radial, also in Querrichtung des Spreizdübels 1, versetzt zueinander sind (Figuren 2b und 2c). Auf diese Weise sind die Spreizöffnungen 15 ohne Hinterschneidung durch einen längs des Spreizdübels 1 entformbaren Kern (nicht dargestellt) im Ausgangszustand herstellbar. Die Spreizöffnungen 15 ergänzen sich zu einem den Spreizbereich 2 längs durchsetzenden Spreizloch 16. Dieses Spreizloch 16 mündet an seinem hinteren Ende in das Innere des rohrförmigen Schaftbereichs 3.

Da bei dem Ausführungsbeispiel die Spreizöffnungen 15 in den Spreizelementen 12 einen geschlossenen Umfang haben, entspricht die Querschnittsfläche A_{L} des Spreizlochs 16 der Querschnittsfläche Aₒ der Spreizöffnungen 15. Die Querschnittsfläche A_{L} des Spreizlochs 16 wird an jeder Stelle längs des Spreizbereichs 2 definiert durch die Umfangsflächen der Spreizöffnungen 15. Aufgrund der im Wesentlichen rechteckigen Form und Anordnung erstreckt sich die Querschnittsfläche A_{L} weniger weit, nämlich nur knapp 0,5 mal so weit, in Richtung der Spreizzungen 11 als quer hierzu. Im Ausgangszustand ist die Querschnittsfläche A_{L} konzentrisch und punktsymmetrisch zur Längsachse A des Spreizdübels 1 angeordnet.

Die Querschnittsfläche Aₒ der Spreizöffnungen nimmt etwa 27% der jeweiligen Querschnittsfläche Aₒ des Spreizdübels 1 im Gebrauchszustand ein. Die Querschnittsfläche Aₒ des Spreizdübels 1 ist dabei durch den Umfang des Spreizdübels 1 an der jeweiligen Stelle im Spreizbereich 2 definiert.

Die Spreizelemente 12 weisen, wie oben ausgeführt, in Längsrichtung des Spreizdübels 1 gesehen eine dreieckige Form auf. Dabei stellt die Stelle, an der die Spreizelemente 12 an die Spreizzungen 11 angebunden sind, den Fuß 17 des jeweiligen Spreizelements 12 dar. Die Breite B dieses Fußes 17, gemessen in Längsrichtung des Spreizdübels 1, beträgt etwa ein 1,1-faches der Höhe H, die sich senkrecht zur Höhe H gemessen hierzu vom Fuß 17 zum Wulst 13 erstreckt.

Ausgehend von den in den Figuren 1a - 1c dargestellten Ausgangszustand wird der Spreizdübel 1 entweder produktionsseitig oder zu einem späteren Zeitpunkt, beispielsweise durch den Verwender, zu dem in den Figuren 2a - 2c dargestellten Zustand zusammengedrückt. Dies kann auch erst beim Einführen des Spreizdübels 1 in ein Bohrloch und muss nicht in jedem Fall, beispielsweise bei größeren Bohrlöchern, vollständig erfolgen. In den Schaftbereich 3 wird vorzugsweise bereits bei der Produktion eine Schraube als Spreizstift (nicht dargestellt) eingebracht. Zum besseren Halt kann hierzu im Schaftbereich 3 ein Gewinde zumindest teilweise ausgeformt sein (nicht dargestellt), in das die Schraube eingedreht ist. Wenn der Spreizdübel 1 wie in den Figuren 2a - 2c dargestellt in das Bohrloch eingeführt ist, kann die Schraube in das Spreizloch 16 eingeschraubt werden. Aufgrund des Versatzes der Spreizöffnungen 15 hat das Spreizloch 16 einen zick-zack-förmigen Verlauf. Die Schraube sollte einen Durchmesser in der Größenordnung der längeren Seite der Querschnittsfläche A_{L} des Spreizlochs 16 haben. Das Eindrehen der Schraube bewirkt dadurch radiale Kräfte, die auf ein Ausrichten der Spreizöffnungen 15 zueinander entsprechend dem Ausgangszustand wirken. Dies hat die Spreizung der Spreizzungen 11 zur Folge, wobei der Umfang der Spreizung insbesondere von dem Durchmesser der Schraube und von dem den Spreizdübel 1 umgebenden Bohrloch abhängt. Die beschriebene Geometrie der Querschnittsfläche A_{L} des Spreizlochs 16 hat zur Folge, dass die Spreizung vor allem in Richtung der Spreizzungen 11 erfolgt und weniger quer hierzu, wo die Spreizöffnungen der Schraube relativ viel Platz geben. Das eingebrachte Drehmoment wird daher vor allem zur Spreizung der Spreizzungen 11 genutzt. Gerade in Hohlbaustoffen kommt es aber dennoch auch zu einer radialen Erweiterung quer hierzu, so dass die Spreizelemente 12 zahnartig nach außen gestellt werden. Dies ermöglicht ohne signifikanten Drehmomentanteil einen guten Hintergriff von Stegen oder dergleichen im Befestigungsgrund. Die beschriebene Dreiecksform der Spreizelemente gibt dabei einen stabilen Halt und sorgt gleichzeitig für eine gute Herstellbarkeit.

### Bezugszeichenliste

### Spreizdübel

- 1: Spreizdübel
- 2: Spreizbereich
- 3: Schaftbereich
- 4: Kragen
- 5: Drehsicherungsrippe
- 6: Spreizhälfte
- 7: Verbindungssteg
- 8: Filmscharnier
- 9: Spreizschale
- 10: Band
- 11: Spreizzunge
- 12: Spreizelement
- 13: Wulst
- 14: Nut
- 15: Spreizöffnung
- 16: Spreizloch
- 17: Fuß
- A: Längsachse des Spreizübels 1
- A_{L}: Querschnittsfläche des Spreizlochs 16
- A_{O}: Querschnittsfläche der Spreizöffnung 15
- A_{D}: Querschnittsfläche des Spreizdübels 1

## Patentansprüche

1. Spreizdübel (1) mit einem sich im Wesentlichen in Längsrichtung des Spreizdübels (1) erstreckenden Spreizbereich (2), mit zwei Spreizzungen (11), von denen jeweils kammartig ineinandergreifende Spreizelemente (12) in Querrichtung des Spreizdübels (1) abstehen, wobei die Spreizelemente (12) jeweils eine Spreizöffnung (15) aufweisen, wobei die Spreizöffnungen (15) in einem Ausgangszustand sich überdecken und ein den Spreizbereich (2) längs durchsetzendes Spreizloch (16) bilden und in einem Gebrauchszustand in Querrichtung des Spreizdübels (1) versetzt zueinander sind, **dadurch gekennzeichnet, dass** sich die Querschnittsfläche A_{L} des Spreizlochs (16) weniger weit in Richtung der Spreizzungen (11) erstreckt als quer hierzu.

2. Spreizdübel nach Anspruch 1, **dadurch gekennzeichnet, dass** sich die Querschnittsfläche A_{L} des Spreizlochs (16) maximal 0,75 mal so weit, insbesondere maximal 0,5 mal so weit, in Richtung der Spreizzungen (11) erstreckt wie quer hierzu.

3. Spreizdübel nach Anspruch 1 oder 2, **dadurch gekennzeichnet, dass** die Querschnittsfläche A_{L} des Spreizlochs (16) konzentrisch und punktsymmetrisch zur Längsachse A des Spreizdübels (1) geformt ist.

4. Spreizdübel nach einem der vorstehenden Ansprüche, **dadurch gekennzeichnet, dass** die Querschnittsfläche Aₒ der Spreizöffnungen (15) mindestens 25% der jeweiligen Querschnittsfläche Aₒ des Spreizdübels (1) im Gebrauchszustand einnimmt.

5. Spreizdübel nach einem der vorstehenden Ansprüche, **dadurch gekennzeichnet, dass** das Verhältnis der Breite B zur Höhe H mindestens eines Spreizelements (12) mindestens 1 und maximal 1,5 beträgt, wobei die Breite B des Spreizelements (12) an dem an der Spreizzunge (11) angeordneten Fuß (17) des Spreizelements (12) in Längsrichtung und die Höhe H von diesem Fuß (17) aus in Querrichtung des Spreizdübels (1) gemessen wird.

6. Spreizdübel nach einem der vorstehenden Ansprüche, **dadurch gekennzeichnet, dass** die Spreizzungen (11) am einbringseitigen Ende des Spreizdübels (1) elastisch verbunden sind.
